# EUROPEAN PATENT APPLICATION

(11) **EP 1 156 436 A1**
(43) Date of publication of application: **21.11.2001**
(21) Application number: 01111252.1
(22) Date of filing: 15.05.2001
(51) Int. Cl.: G06F 17/60

(54) **Reuse system and reuse control method**

(30) Priority: 15.05.2000 JP 2000141677
(71) Applicant: NEC CORPORATION, Tokyo (JP); Kimura, Fumihiko, Bunkyo-ku, Tokyo (JP); Tomiyama, Tetsuo, Taitou-ku, Tokyo (JP); Umeda, Yasushi, Tama-shi, Tokyo (JP)
(72) Inventor: Tamura, Tetsuya, Minato-ku, Tokyo (JP); Fujimoto, Jun, Minato-ku, Tokyo (JP); Tani, Masashi, Minato-ku, Tokyo (JP); Maemura, Atsumi, Minato-ku, Tokyo (JP); Terasawa, Tomoya, Minato-ku, Tokyo (JP); Kimura, Fumihiko, Minato-ku, Tokyo (JP); Tomiyama, Tetsuo, Minato-ku, Tokyo (JP); Omeda, Yasushi, Minato-ku, Tokyo (JP)
(74) Representative: VOSSIUS & PARTNER

(57) **Abstract**

A product terminal incorporated in a product sends using state information for each configuring unit in real time to the host computer. The host computer estimates QCD of collected product considering possibility of reuse of each unit of the product, and shares the information with a warehouse center terminal, a factory terminal, and a collection terminal to effectively produce products.

## Description

The invention relates to a reuse system which is capable of reusing a product requiring maintenance, such as a facsimile for domestic use and to a method of controlling the reuse system.

Conventionally, there is no effective reuse system for a product such as a home use facsimile. Therefore, after the product can not work due to aging or some trouble, the product is forced to be discarded.

On the other hand, in conventional production systems which have well and strictly been controlled with QCD so as to keep a fixed quantity and quality of manufacturing of the products, where QCD is an abbreviation of quality/quantity-cost-delivery.

Also, inverse manufacturing (IM) system is well known which collects used products (parts) and reuses them to reduce an amount of waste. To constantly work the IM system, the above mentioned QCD control is also required.

In particular, QCD control of the used products is the most important point in IM system. As long as the used products have been purchase and delivered in a conventional manner, it is very difficult to perform QCD control for the used products. This is because once they are broadly spread in a market and then purchased, any information of the purchased products can not be obtained after the products are purchased.

Now, a lease or rental system of the products might attract public attention. Such the aspect of a contract is commonly used for a copy machine or other machines located in a company. In compliance with such a contract, the information of the purchased products can be easily obtained and it is suitable for controlling QCD of the products when they are collected after use of them.

In JP-A-11-126008 a toner cartridge including ink used for a laser beam printer is provided so as to have a memory to store information related to a history of using parts of the toner cartridge.

Thereby, it is possible to determine whether or not the toner cartridge can be reused when the toner cartridge is used and collected by a manufacturer.

Herein, information of each part of the toner cartridge is written to the memory when the toner cartridge is shipped from a factory. In addition, information such as sheets of paper printed by a printer using the toner cartridge is stored in the memory after the toner cartridge is inserted into the printer.

When the toner cartridge can not work due to lack of toner or other reason, the toner cartridge is removed from the printer and sent back to its manufacturer. After that, the information stored in the memory of the used toner cartridge is read out via a computer to obtain a using history of each part of the toner cartridge. The information is compared with corresponding predetermined value and then, it is determined whether each part can be reused or should be discarded. If it is determined that a part can be reused, the number of times which the part is recycled is stored in the memory and the part is shipped again.

In this method, however, the manufacturer of the toner cartridge can not know the information of a using history until the toner cartridge is collected.

Also, in Japanese Laid Open Publication No. 2000-48066, an IC tag attached to a product is disclosed. In the IC tag, various information on management of a life cycle is stored at related locations such as a factory, a store; a maintenance service company, a company collecting the used product, and a recycle company.

The various information includes a model of the product, existence of a recycle part incorporated in the product, a sort of a part, an attribute of a part, a discarding method of a part, a sales channel, a repairing history, and a maintenance history.

However, in this method, the manufacturer of the toner cartridge can not also know the information related to management of a life cycle before the product is collected and the IC tag is read.

Therefore, by using the above conventional methods, it is impossible to know such the information while a product is being used before the product is collected. As a result, it is difficult to estimate or manage QCD of parts of a product considering reuse of the parts.

It is, therefore, an object of the invention to provide a reuse system which is capable of estimating QCD of a used product considering possibility of reuse in a set of units configuring a system.

It is also an object of the invention to a method of managing state of use of a product. The method is capable of estimating QCD of a used product considering possibility of reuse in a set of units configuring a system

According to a first aspect of the invention, there is provided a reuse system. The system comprises a host computer which manages using states of products and a product terminal which is incorporated in a product used by a user and stores using state of units in the product. And wherein, when the using state of the unit satisfies a predetermined condition, the product terminal sends using state information representing that the using state of the unit satisfies the condition to the host computer, and wherein the host computer stores the using state information for each unit and when one of the units is collected after use, the host computer determines whether the unit can be reused or not by referring to the using state information of the corresponding unit.

According to a second aspect of the invention, there is provided a reuse system. The system comprises a host computer which manages using states of products, a store terminal which sends contract information identifying a user and a product purchased by the user, to the host computer in response to purchase of the product by the user, and a product terminal which is incorporated in the product and stores using state of units in the product, and which when the using state of the unit satisfies a predetermined condition, sends using state information representing that the using state of the unit satisfies the condition to the host computer.

According to a third aspect of the invention, there is provided a method of managing of using state of product used by a user. The method comprises the steps of detecting operation or state of units of a product and storing at least one of the number of operation times, the number of operating time, and the state as using state information, checking whether the using state information satisfies a predetermined condition of not, and sending, when the using state satisfies the predetermined condition, using state information representing that the using state of the unit satisfies the condition.
Fig. 1 shows a block diagram of a reuse system according to an embodiment of the invention;
Fig. 2 shows a list of units included in a product;
Fig. 3 shows examples of alert output information from a product terminal;
Fig. 4 shows examples of input/output information provided via a store terminal;
Fig. 5 shows a flowchart of a method of transferring contract information from the store to a host computer;
Fig. 6 shows examples of customer information stored in the host computer;
Fig. 7 shows a flowchart of a method of sending maintenance information;
Fig. 8 shows a flowchart of a method of determining a unit required to be sent;

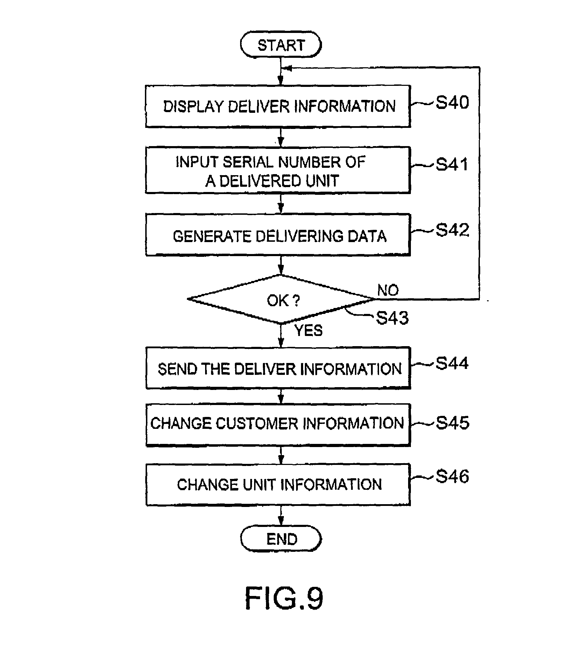

Fig. 9 shows a flowchart of a method of delivering the unit to a user;
Fig. 10 shows examples of deliver information sent when the unit is delivered;
Fig. 11 shows a flowchart of a method of determining a unit required to be collected;
Fig. 12 shows examples of estimated collection information sent to a unit collection terminal;
Fig. 13 shows a flowchart of producing collection and detection data;
Fig. 14 shows a flowchart of sending information on an amount of units which are to be produced;
Fig. 15 shows items of the production control information;
Fig. 16 shows a flowchart of sending information on an estimated amount of units which can be reused;
Fig. 17 shows an example of displayed unit information;
Fig. 18 shows items of the unit information; and
Fig. 19 shows a flowchart of sending the unit information by a factory terminal.

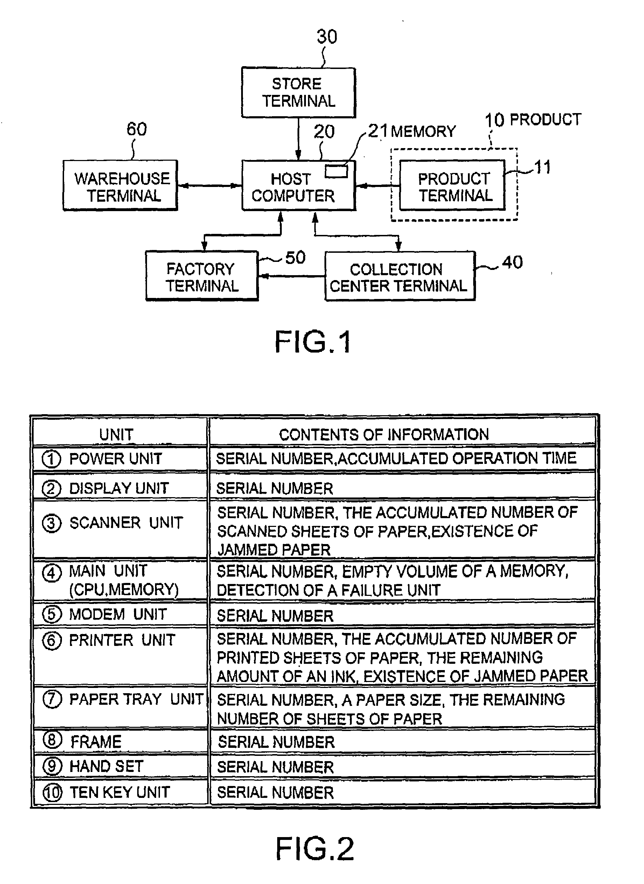

A reuse system shown in Fig. 1 includes a host computer 20 which manages a state of use of the product 10 and a product terminal which is connected to the host computer 20 and related to the product 10 used by a user (for example, a home use facsimile).

The system further includes a store terminal 30 located in a store which contracts to sell the product, a collection center terminal 40 located in a center where units configuring the product are collected and checked, a factory terminal 50 located in a factory where the product is produced, and a warehouse terminal 60 located in a center to hold the product temporarily to deliver,

The terminals 30, 40, 50, and 60 are all connected to the host computer 20 and the collection center terminal 40 is also connected to the factory terminal 50.

Each operation explained hereinafter, according to the invention, is performed in the corresponding terminal of the above terminals (11, 20, 30, 40, 50, and 60). Each terminal has a memory and a CPU, and the memory stores instructions to execute the operation and the CPU executes each instruction to perform the operation.

The instructions may be copied to the memory from a recording medium such as a CD-ROM and a DVD-ROM.

In Fig. 2, units configuring the product 10 are listed. That is, the product 10 includes a power unit, a display unit, a scanner unit, a main unit, a modem unit, a printer unit, a paper tray unit, a frame (a body) of the product, a hand set (a telephone receiver), and a ten key pad.

At least one of the units of the product 10 can be replaced by a newly produced unit or a reuse unit.

The main unit further includes a CPU and a memory. The main unit serves as the product terminal 11 shown in Fig. 1.

Fig. 2 also shows unit information to be managed for each unit. For example, an accumulated operation time is listed as information of the power unit, and the number of accumulated sheets of paper scanned is listed as information of the scanner unit.

The product terminal 11 stores a predetermined using condition for each unit of the corresponding product 10. The product terminal 11 determines a using state of a unit and when the determined using state meets the predetermined using condition of the unit, using state information which expresses that the above condition is met is sent from the product terminal 11 to the host computer 20.

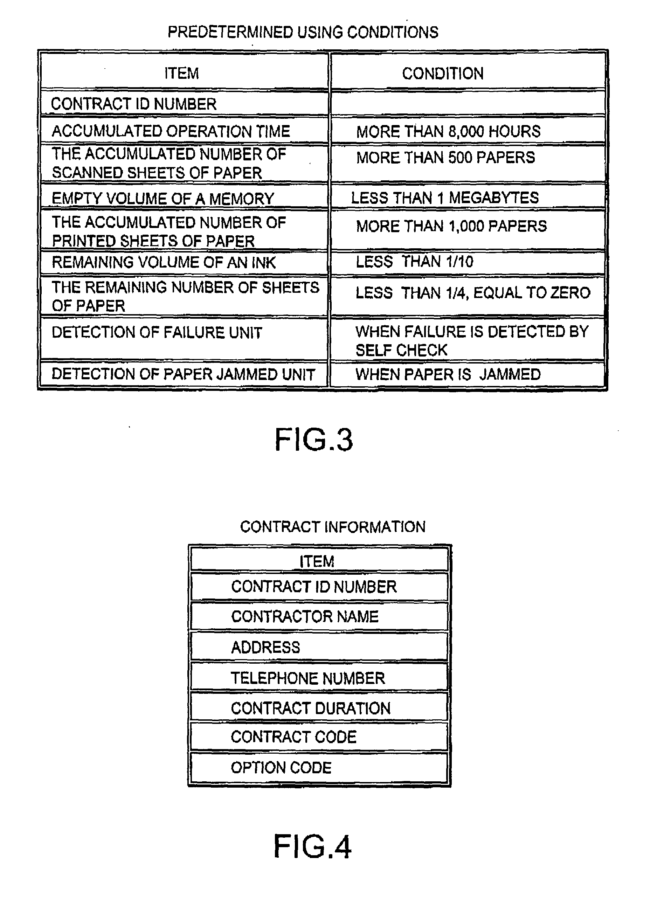

In Fig. 3, the predetermined using conditions are illustrated. For example, one condition is that an accumulated operation time of the power unit exceeds 8,000 hours, and another condition is that the number of scanned sheets of paper (accumulated) of the scanner unit exceeds 500 sheets of paper.

The product terminal 11 sends the using state information of each unit to the host computer 20 via a telephone line, or a computer network such as the Internet. Also, the product terminal 11 can sends the information by using a radio network or other known transmission method.

Referring back to Fig. 1, the host computer 20 includes a memory 21 to store the using state information from the product terminal 11, as management information of each unit.

In the reuse system, it is determined whether a unit of a product can be reused or not by using the management information stored in the memory 21 when the corresponding product is collected from a purchasing user, namely, a purchaser.

Next, description is made about each process in the reuse system shown in Fig. 1 in detail.

### 1. Contract process

When a store contracts to sell products, contract information shown in Fig. 4 is entered into the store terminal 30 and the store terminal 30 sends the contract information to the host computer 20.

The contract information includes items such as a contract ID number, a contractor name (a customer), and an address of the purchaser or a contractor. In general, the contractor name and the address of the contractor are expressed by text data and the other items are expressed by numerical data.

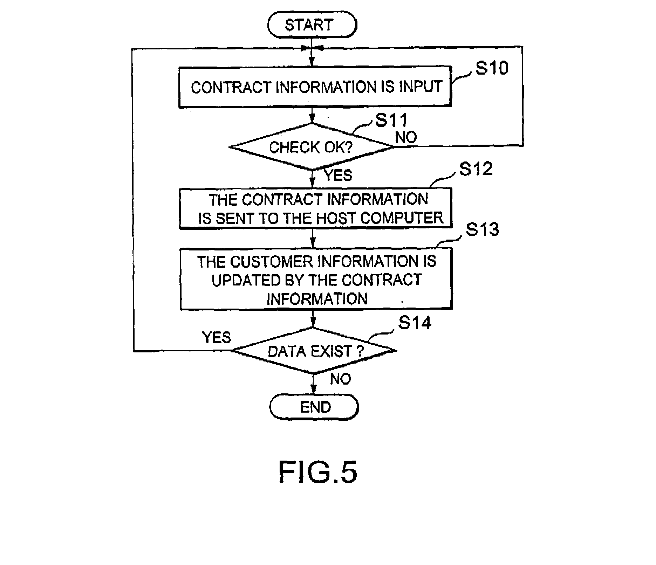

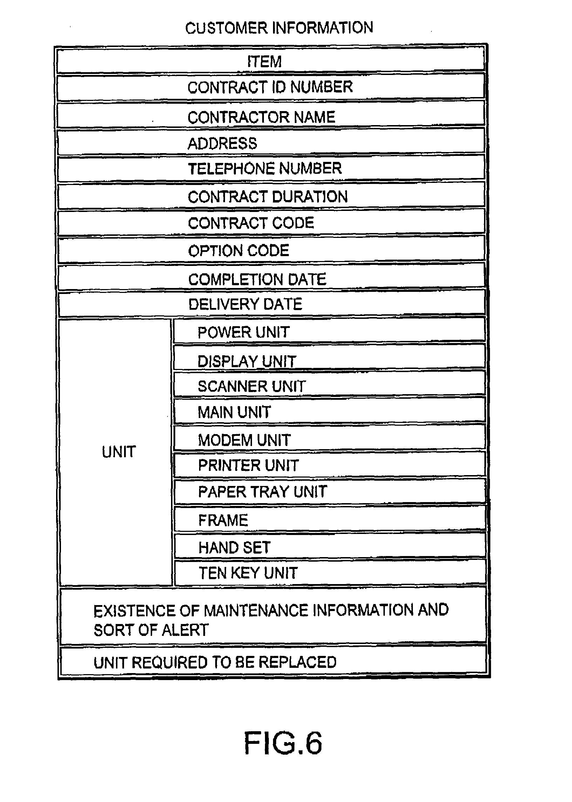

The contract information is sent to the host computer 20 based on a flowchart shown in Fig. 5. At first, the contract information is entered into the store terminal 30 at step S10 and is sent to the host computer 20 at step S12 after a predetermined check process (step S11). The checked contract information is then provided to customer information (shown in Fig. 6) stored in the memory 21 of the host computer 20. A part of items in the customer information are automatically updated by the corresponding items in the checked contract information.

The customer information shown in Fig. 6 includes the same items as the items in the contract information shown in Fig. 4 (for example, a contract ID number, a contractor name, and an address of the contractor), as described above. The customer information also includes the other items other than the items in the contract information, such as items related to each unit of a product.

In general, the contractor name and the address of the contractor are expressed by text data and the other items are expressed by numerical data. In particular, the item related to each unit is generally expressed by a numerical number such as a serial number of the unit.

### 2. Maintenance process

When an event which meets one of the conditions shown in Fig. 3 occurs on a product used by a user, the product terminal 11 generates maintenance information and sends it to the host computer 20.

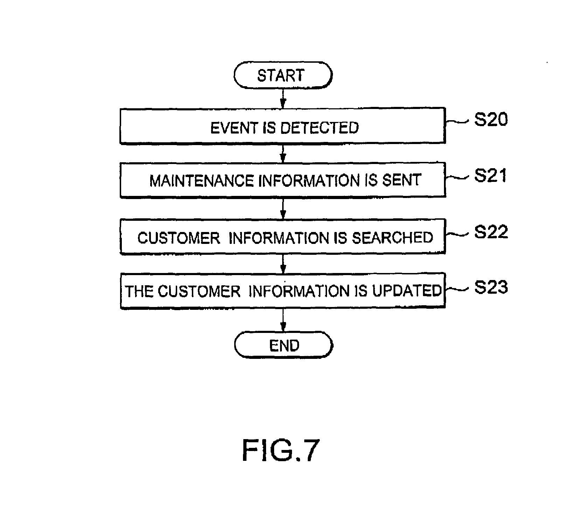

Next, this process is described referring to a flowchart shown in Fig. 7. At step S20, the occurrence of the above event is detected by the product terminal 11. Then, the maintenance information corresponding to the event is generated and sent from the product terminal 11 to the host computer 20 at step S21.

Next, at step S23, customer information is searched which corresponds to a customer of a product in which the event occurs using, for example, a contract ID number as a search key at step S22.

When the corresponding customer information is found, an item (existence of maintenance information and a sort of alert) in the customer information stored in the memory 21 in the host computer 20, is updated based on the maintenance information at step S23.

### 3. Delivery process of a product and a unit

The host computer 20 searches, in a predetermined interval (for example, an hour), units required to be replaced by using newly added customer information and existing customer information (the existence of maintenance information and the sort of alert), and displays or prints the searched units.

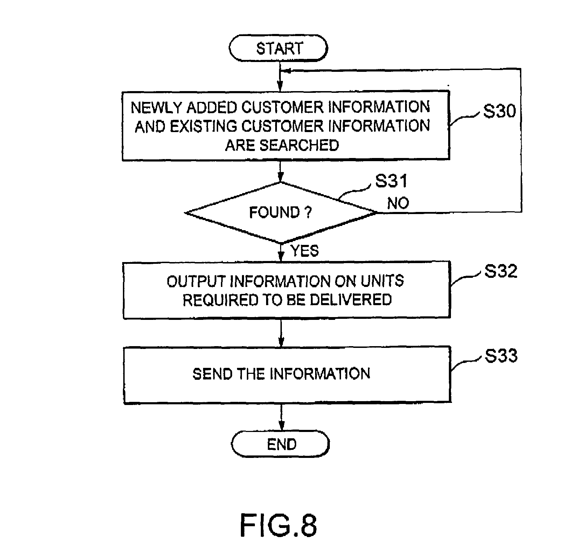

Next, the process is described in more detail with reference to Fig. 8. At first, in step S30, the newly added customer information and the existing customer information are searched.

When information showing new units (or products) that delivery is required is found (step S31 (yes)), the process proceeds to step S32 and then, all units and products to be delivered are listed.

Then, in step S33, the listed information of the units is sent to a warehouse terminal 60. After that, the units (including products) are delivered to a user based on the listed information.

Also, the warehouse terminal 60 generates deliver information and sends the information to the host computer based on a flowchart shown in Fig . 9.

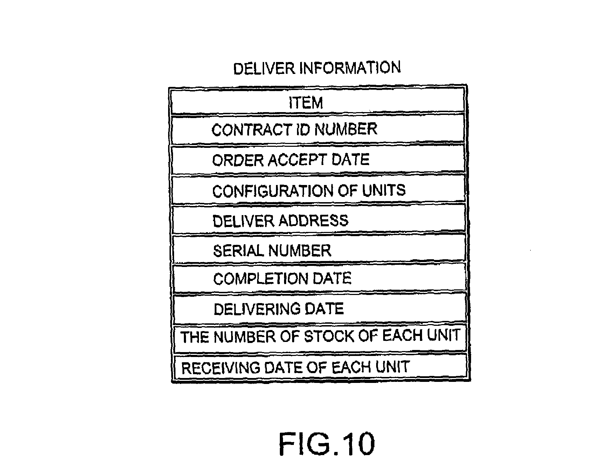

The deliver information includes items as shown in Fig. 10.

### 4. Collection and check process

The host computer 20 searches, in a predetermined interval (for example, a day), units to be collected by using customer information of a customer. In addition, the host computer 20 monitors whether a contract expires and continues with reference to customer information (the existence of maintenance information and the sort of alert), and displays or prints the searched units.

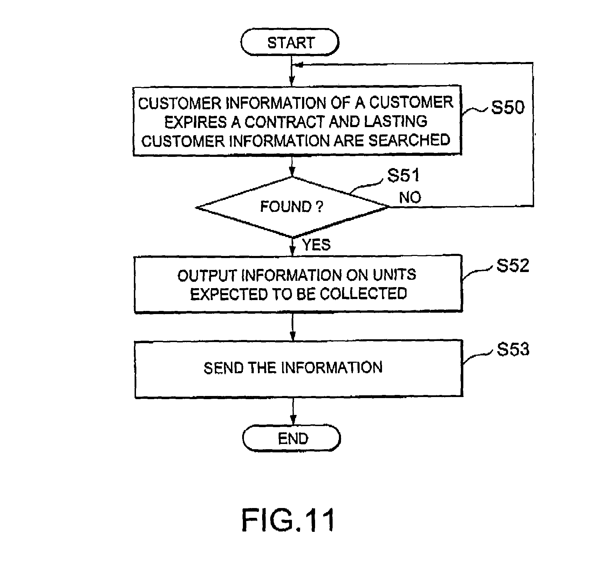

Next, the process is described in more detail with reference to Fig. 11. At first, in step S50, searching is carried out by using the customer information about continuation or expiration of a contract.

When information requests collection of units (or products) (step S51(yes)), the process proceeds to step S52 and then, all units and products which are required to be collected are listed.

Then, in step S53, the listed information of the units is sent to a collection center terminal 40.

Decision is made about whether units or products which are collected based on the listed information can be reused or not in a collection center where the collection center terminal 40 is located.

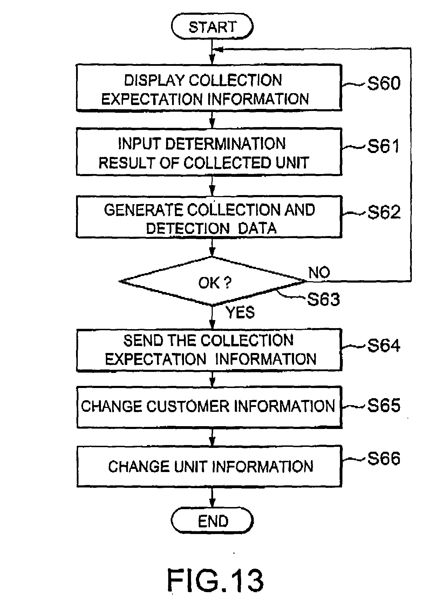

Also, the collection center terminal 40 generates collection prediction information and sends the information to the host computer 20 based on a flowchart shown in Fig. 13.

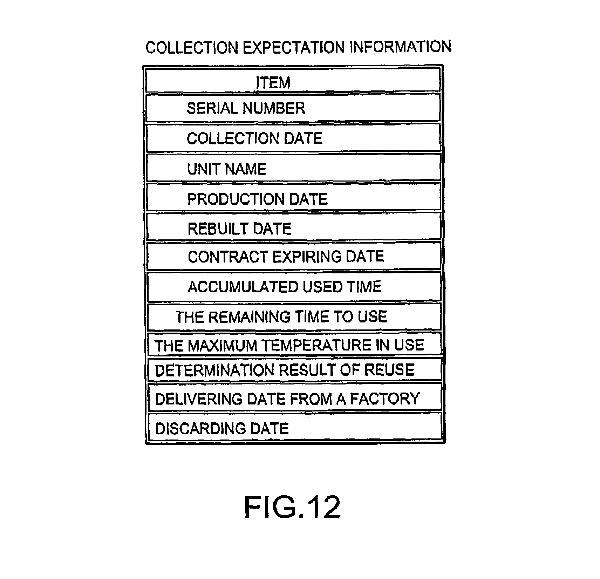

The collection expectation information includes items as shown in Fig. 12.

### 5. Estimating process of an amount of units to be produced

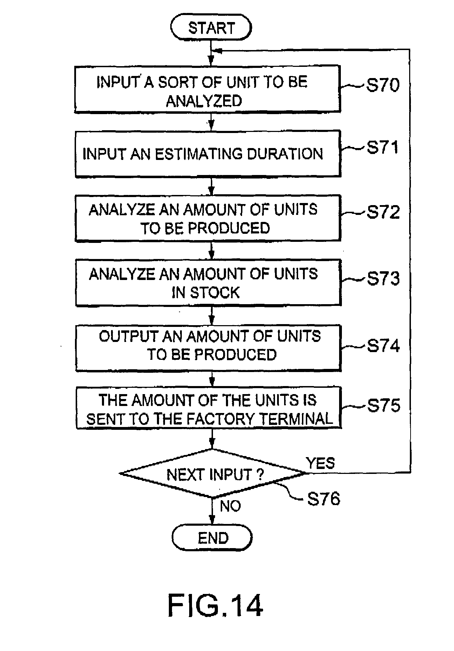

In the factory terminal 50 and the host computer 20, the estimating process is performed. The process performed in the factory terminal 50 and the host computer 20 is described with reference to Fig. 14.

At first, in steps S70 and S71, a sort of unit to be estimated and an estimating duration are entered into the host computer 20 via the factory terminal 50. Then, the host computer 20 searches the customer information to analyze and estimate an amount of units to be produced, considering an amount of products and unit sold and maintenance states in step S72.

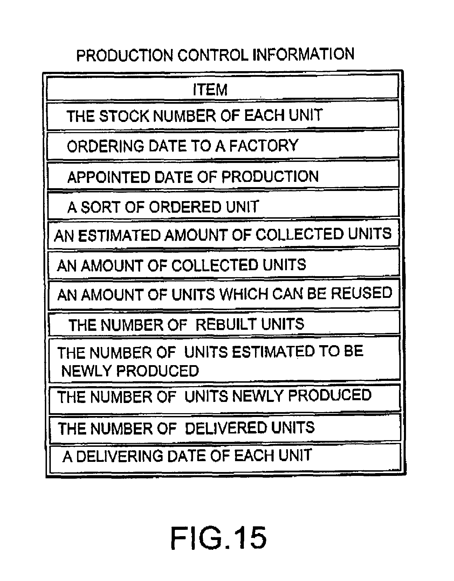

Then, the host computer 20 analyzes and estimates the number of the units in stock in the entered estimating duration by accessing production control information as shown in Fig. 15 in step S73.

Next, the host computer 20 calculates an amount of units to be produced by using the estimated amount of units to be produced and the estimated amount of units in stock, in step S74.

Then, the estimated amount of units to be produced is sent to the factory terminal 50 in step S75. The above described process is repeated until the sort of the units is entered (step S76).

### 6. Estimating process of an amount of units to be reused

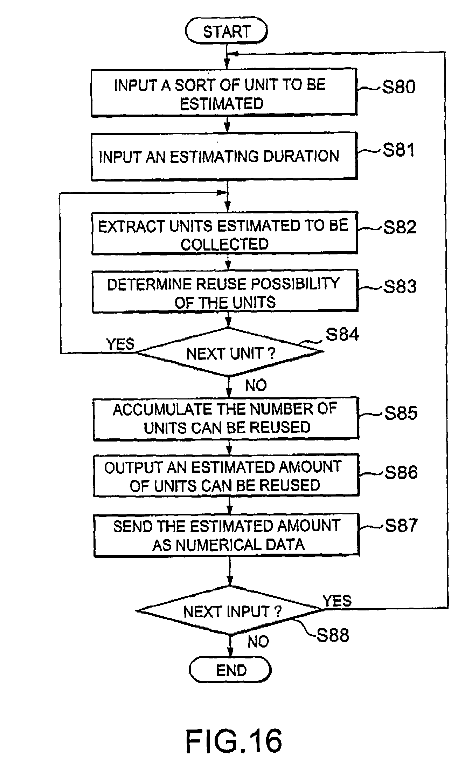

In the factory terminal 50 and the host computer 20, estimating process is performed to obtain an amount of units to be reused. The process performed in the factory terminal 50 and the host computer 20 is described with reference to Fig. 16.

At first, in steps S80 and S81, a sort of unit to be reused and an estimating duration are entered into the host computer 20 via the factory terminal 50. Then, the host computer 20 searches items, for example a contract duration, existence of maintenance information, on the basis of the customer information to analyze and output serial numbers of units to be collected, in step S82.

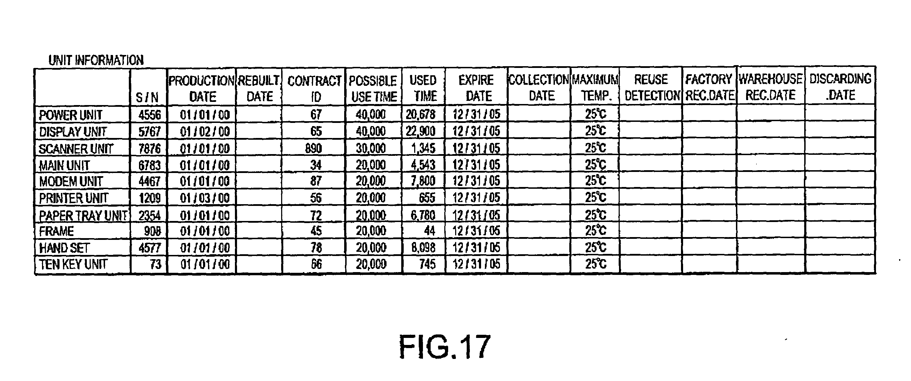

Then, in step S83, the host computer 20 accesses unit information as shown in Fig. 17 to extract a possible using time in a life cycle and an accumulated using time of units each of which corresponds to one of the serial numbers obtained in step S82. The host computer 20 further calculates the remaining possible using time of each unit by referring to the possible using time in a life cycle and the accumulated using time, and determines that the unit has the remaining possible using time over a year and can be reused.

The extraction process and the determination process are repeated for each unit expected to be collected. After that, the host computer 20 counts the number of units determined to be reused in step S85. Next, the host computer 20 outputs the number of units and sends it to the factory terminal 50 in steps S86 and S87.

### 7. Estimating process of an amount of units to be newly produced

The amount of units to be newly produced can be determined by subtracting the amount of units to be reused from the amount of units to be produced. Therefore, it is desirable to prepare materials to produce the obtained amount of units.

### 8. Producing process of units

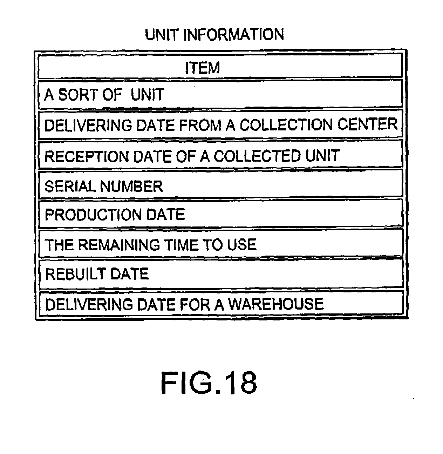

Resulting from the above operations, the factory terminal 50 displays units which are determined to be reused as shown in Fig. 18. Rebuilt information is entered via the factory terminal 50 for a unit which is rebuilt.

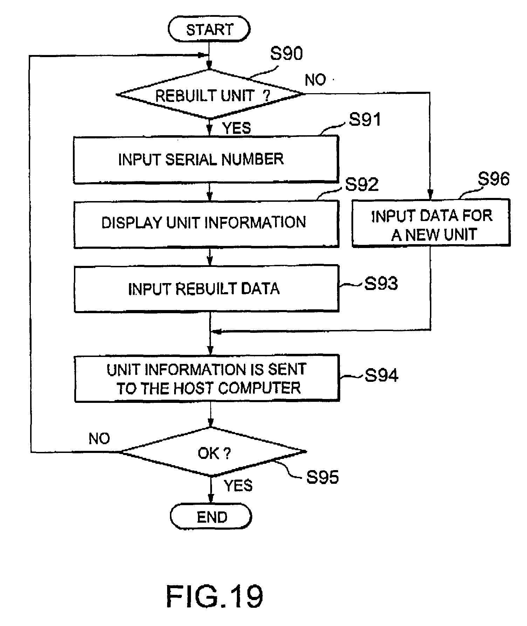

Next, the process is described with reference to Fig. 19. At first, in step S70, it is determined whether a unit is rebuilt or not. If the unit is rebuilt, in steps S91 and S92, a unit serial number is entered as rebuilt information and unit information corresponding to the serial number is displayed. Then, rebuilt data related to rebuilt operation are entered to the displayed unit information in step S93.

On the other hand, if the unit is not rebuilt, unit information is newly typed or input in step S96.

Then, unit information (for rebuilt unit and non-rebuilt unit) is sent to the host computer 20. And the process is repeated for all units. (step S95).

As described above, according to the invention, a product terminal incorporated In a product sends using state information for each configuring unit in real time to the host computer. Therefore, it is possible to estimate QCD of collected product considering possibility of reuse of each unit of the product.

Also, in the above systems disclosed in Japanese Laid Open Publication Nos. H11-126008 and 2000-48066, it is to be noted that using state information representing state of use for each unit is not sent from a product to a host computer like the invention.

In the system disclosed in Japanese Laid Open Publication No. 2000-48066, life cycle management information of a product is accumulated in a database at each center (for example, a factory, a wholesale market, a store, or a collection center), but after the product is sold, the information can be obtained only when the product is collected.

Therefore, in the system, it is impossible to estimate QCD of collected product considering reuse of units of the product.

However, according to the invention, using state information on each unit in a product is provided to a host computer in real time. Therefore, it is possible to estimate a collecting timing of units or products, an amount of collecting, a quality of collected units or products in real time.

Also, in the disclosed system, using state information is written into IC tag incorporated in a product. In the case, any device is required to read the using state information in the IC tag at each related center and, as a result, a great cost of equipment is required. Furthermore, it is necessary to write using state information into the IC tag when all products passes through each center, to get the using state information, the IC tag should be collected as well as a product including the IC tag.

Also, it is difficult to apply the disclosed system to the existing selling system since managing information in the IC tag and information in the database is complicated.

On the contrast, according to the invention, using state information is all managed in a host computer, predetermined conditions corresponding units in a product are only stored in a product terminal in the product. Further, at each center related to the product, it is not necessary to access the product terminal in the product.

Also, the system disclosed in Japanese Laid Open Publication No. 2000-48066, there is no advantage for a user since the system aims to provide a merit to a manufacturer of the product and a selling side.

However, in the invention, maintenance information or repair information for a product is rapidly provided to a service center or a manufacturer of the product, since using state information of the product is sent to the host computer in real time. Thereby, a response time of maintenance service of the product can be reduced. Further, exchange of unit, delivery of expendable supplies can be executed rapidly, and a user can get a great deal of merits.

The system disclosed in Japanese Laid Open Publication No. H11-126008 also can not collect information on a cartridge while the cartridge being used. Therefore, it is also impossible to estimate QCD of collected product considering reuse of units of the product.

Also, since the system in Japanese Laid Open Publication No. H11-126008 uses a cartridge including a storing device in a similar manner to the system disclosed in Japanese Laid Open Publication No. 2000-48066, the system in Japanese Laid Open Publication No. H11-126008 has the same demerits as the system disclosed in Japanese Laid Open Publication No. 2000-48066.

## Claims

1. A reuse system comprising:
a host computer which manages using states of products (10); and
a product terminal (11) which is incorporated in a product (10) used by a user and stores using state of units in the product (10), wherein when the using state of the unit satisfies a predetermined condition, the product terminal (11) sends using state information representing that the using state of the unit satisfies the condition to the host computer (20), and wherein the host computer (20) stores the using state information for each unit and when one of the units is collected after use, the host computer (20) determines whether the unit can be reused or not by referring to the using state information of the corresponding unit.

2. The reuse system of claim 1, wherein the product terminal (11) sends the using state information to the host computer (20) via a telephone line.

3. The reuse system of claim 1 or 2, wherein the product terminal (11) sends the using state information to the host computer (20) via a computer network.

4. The reuse system of claim 1, 2 or 3, wherein the predetermined condition is defined for at least one of a using state of resource of the unit or product (10), the number of operation times of a function of the product (10), and a operating time of the product (10).

5. A reuse system comprising:
a host computer (20) which manages using states of products (10);
a store terminal (30) which sends contract information identifying a user and a product (10) purchased by the user, to the host computer (20) in response to purchase of the product (10) by the user; and
a product terminal (11) which is incorporated in the product (10) and stores using state of units in the product (10), and which when the using state of the unit satisfies a predetermined condition, sends using state information representing that the using state of the unit satisfies the condition to the host computer (20).

6. The reuse system of claim 5, wherein the system further includes a warehouse terminal (60) which is connected to the host computer (20) and is located in a center where products (10) are kept temporarily to deliver, and wherein the host computer (20) determines units required to be replaced by referring to the contract information and the using state information in a predetermined interval, and informs the warehouse terminal (60) of the units.

7. The reuse system of claim 5 or 6, wherein the system further includes a collection center terminal (40) which is connected to the host computer (20) and is located in a center where used products (10) are collected and checked, and wherein the contract information further includes a contract duration, and the host computer (20) determines units required to be collected by referring to expiration of a user's contract from the contract information and the using state information and informs the collection center terminal (60) of the of the units.

8. A method of managing using state of product (10) used by a user, the method comprising the steps of:
detecting operation or state of units of a product (10) and storing at least one of the number of operation times, the number of operating time, and the state as using state information;
checking whether the using state information satisfies a predetermined condition of not; and
sending, when the using state satisfies the predetermined condition, using state information representing that the using state of the unit satisfies the condition,

9. The method of claim 8, wherein the steps are performed in a computer (11) incorporated in the product (10), and the using state information is sent to another computer (20) external of the product (10).

10. The method of claim 9, wherein the using state information is sent from the computer (11) in the product (10) to the other computer (20) via a telephone line.

11. The method of claim 9 or 10, wherein the using state information is sent from the computer (11) in the product (10) to the other computer (20) via a computer network.

12. A recording medium readable by a computer, tangibly embodying a program of instructions executable by the computers to perform a method of managing of using state of product (10) used by a user, the method comprising the steps of:
detecting operation or state of units of a product (10) and storing at least one of the number of operation times, the number of operating time, and the state as using state information;
checking whether the using state information satisfies a predetermined condition of not; and
sending, when the using state satisfies the predetermined condition, using state information representing that the using state of the unit satisfies the condition.

13. A program product comprising, computer readable instructions and a recording medium bearing the computer readable instructions; the instructions being adaptable to enable computers to perform a method of managing of using state of product (10) used by a user, the method comprising the steps of:
detecting operation or state of units of a product (10) and storing at least one of the number of operation times, the number of operating time, and the state as using state information;
checking whether the using state information satisfies a predetermined condition of not; and
sending, when the using state satisfies the predetermined condition, using state information representing that the using state of the unit satisfies the condition.
